# EUROPEAN PATENT APPLICATION

(11) **EP 1 883 249 A1**
(43) Date of publication of application: **30.01.2008**
(21) Application number: 07112859.9
(22) Date of filing: 20.07.2007
(51) Int. Cl.: H04N 9/31, G03B 21/10, G03B 21/28

(54) **Rear projection display device**

(30) Priority: 28.07.2006 JP 2006206731
(71) Applicant: Sony Corporation, Minato-ku Tokyo 108-0075 (JP)
(72) Inventor: Iwasaki, Masanori, Tokyo (JP)
(74) Representative: Körber, Martin Hans

(57) **Abstract**

A rear projection display device that projects an image on a rear side of a screen (5) includes a light source (1), an optical element (2), a scanning unit (3), and a reflecting plate (4; 40). The light source (1) emits a light beam. The optical element (2) converts the light beam emitted from the light source (1) into a substantially collimated light beam. The scanning unit (3) performs scanning with the substantially collimated light beam converted by the optical element (2) so as to allow the substantially collimated light beam to be incident on the screen (5) . The reflecting plate (4; 40) has a height which is at least 1/2 of a height of the screen (5). The reflecting plate (4; 40) reflects the light beam from the scanning unit (3) so that the light beam is incident on the screen (5).

## Description

### CROSS REFERENCES TO RELATED APPLICATIONS

The present invention contains subject matter related to Japanese Patent Application JP 2006-206731 filed in the Japanese Patent Office on July 28, 2006, the entire contents of which are incorporated herein by reference.

### BACKGROUND OF THE INVENTION

### 1. Field of the Invention

The present invention relates to a rear projection display device that performs scanning with a light beam to project an image on a rear side of a screen from.

### 2. Description of the Related Art

Rear projection display devices are becoming popular as display devices following liquid crystal television devices and plasma television devices. The rear projection display devices are rapidly spread because they are markedly cheaper than rear projection plasma television devices.

The system employed by the rear projection display devices is shifted from a known cathode ray tube (CRT) system to a system with a micro display, such as a liquid crystal display (LCD). The rear projection display devices can reproduce a high quality image comparable to that provided by displays of the liquid crystal television devices and plasma television devices.

In the rear projection display devices, a desire of increase in size of a screen, and a desire of reduction in thickness of a device are increasing rapidly, similarly to other display devices.

However, in known rear projection display devices, a space occupied by an enlargement projection optical system may be large, and in particular, the distance at the rear side of the screen along a depth direction may be large.

Accordingly, for example, Japanese Unexamined Patent Application Publication No. 5-165095 suggests a configuration of a rear projection display device in which the distance at the rear side of the screen along the depth direction is reduced by projecting image light on the screen in an inclined manner. In addition, for example, Japanese Unexamined Patent Application Publication No. 2001-235799 discloses a configuration of a rear projection display device which includes a projection optical system that projects an image of a panel display surface onto a screen, and a plane mirror system that bends an optical path extending from the projection optical system to the screen surface. The plane mirror system has at least two plane reflecting surfaces which are disposed such that one of the two surfaces faces the screen surface, and reflects a light beam two times.

### SUMMARY OF THE INVENTION

Unfortunately, the known rear projection display devices designed for realizing the reduction in thickness may cause some problems. In particular, distortion may appear in the image light to be projected on the screen, and heat at a high temperature may be generated due to the complicated structure of the optical system.

Accordingly, it is desirable to provide a rear projection display device that realizes increase in size of a screen and reduction in thickness of the device by way of a simple device structure.

A rear projection display device that projects an image on a rear side of a screen, according to an embodiment of the present invention, includes a light source, an optical element, a scanning unit, and a reflecting plate. The light source emits a light beam. The optical element converts the light beam emitted from the light source into a substantially collimated light beam. The scanning unit performs scanning with the substantially collimated light beam converted by the optical element so as to allow the substantially collimated light beam to be incident on the screen. The reflecting plate has a height which is at least 1/2 of a height of the screen. The reflecting plate reflects the light beam from the scanning unit so that the light beam is incident on the screen.

With this configuration, a rear projection display device may be provided that realizes increase in size of the screen, and decrease in thickness of the device by way of the simple device structure.

### BRIEF DESCRIPTION OF THE DRAWINGS

Fig. 1 is a schematic illustration showing an inner structure of a rear projection display device according to a first embodiment to which the present invention is applied.
Fig. 2 is a block diagram showing a system configuration of the rear projection display device according to the first embodiment to which the present invention is applied.
Fig. 3 is an explanatory illustration showing an example of a method for determining relative positions of an exit point of a pencil of light beams from a scanning mirror, a light-guiding screen mirror, and a screen.
Figs. 4A and 4B are explanatory illustrations each showing a correlation between the light-guiding screen mirror and the screen in view of their positions and sizes.
Fig. 5 is a schematic illustration showing an inner structure of a rear projection display device according to a second embodiment to which the present invention is applied.
Fig. 6 is an explanatory illustration showing a correlation between a light-guiding screen mirror and a screen in view of their positions and sizes.

### DESCRIPTION OF THE PREFERRED EMBODIMENTS

Exemplary embodiment to which the present invention is applied are described below with reference to the attached drawings.

### First Embodiment

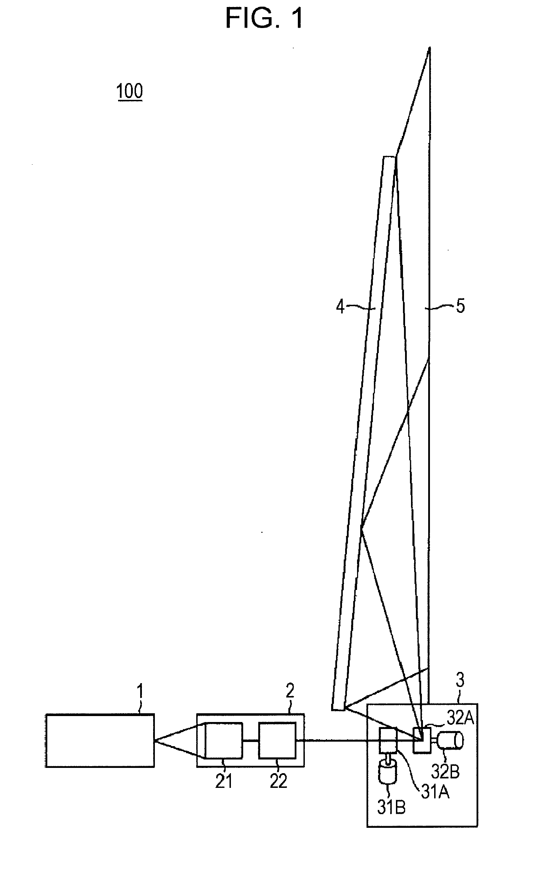

Fig. 1 is a schematic illustration showing an inner structure of a rear projection display device 100 according to a first embodiment to which the present invention is applied. The rear projection display device 100 includes a light source 1, an optical element 2, a scanning section 3, a light-guiding screen mirror 4, and a screen 5. The optical element 2 has a pencil-shaping optical element 21 and a pencil-conversion optical element 22.

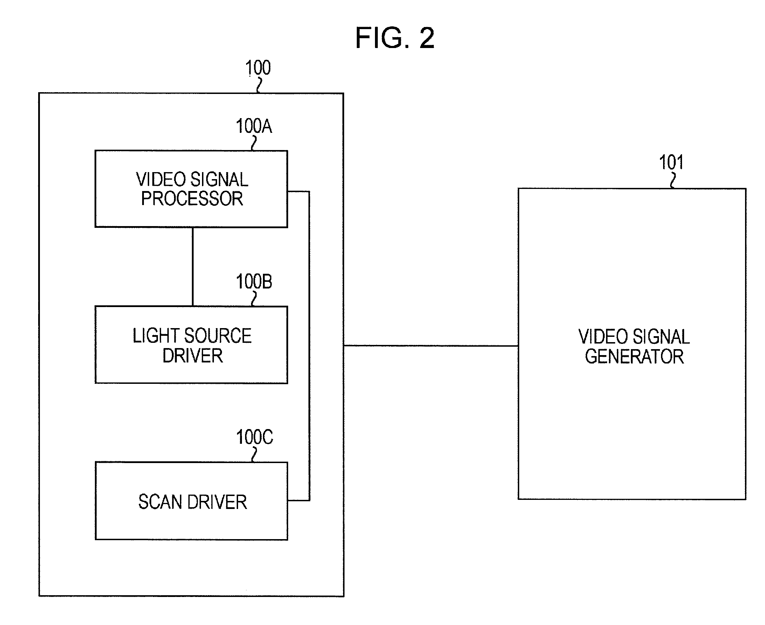

Fig. 2 is an illustration showing a system configuration of the rear projection display device 100. The rear projection display device 100 may receive various video signals when being connected to a video signal generator 101, such as a video player, a video camera, a video recorder, a broadcasting tuner, or the Internet. The rear projection display device 100 includes a video signal processor 100A that processes video signals input by the video signal generator 101, a light source driver 100B that drives the light source 1 in accordance with the video signals, and a scan driver 100C that drives the scanning section 3 in accordance with the video signals.

In the light source 1, a semiconductor laser is directly modulated to provide laser beams as modulated light. The light source 1 emits the laser beams of the semiconductor laser, the laser beams being modulated at a desired angle of divergence. In the light source 1, the angle of divergence of the laser beams of the semiconductor laser in a horizontal direction is different from the angle of divergence thereof in a vertical direction, and hence, the cross section of the pencil of light beams is ellipsoidal. Alternatively, the light source 1 may be a gas laser, a solid laser, a light-emitting diode, or the like, instead of the semiconductor laser. The optical element 2 includes a cylindrical lens and a convex lens, however, it is not limited thereto. For example, the optical element 2 may include a prism.

The laser beams emitted from the light source 1 enter the pencil-shaping optical element 21, whereby the ellipsoidal cross section of the pencil of light beams is shaped into a circular cross section. The laser beams with the shaped cross section of the pencil of light beams enter the pencil-conversion optical element 22, whereby the laser beams are converted into substantially collimated light beams, with a diameter of the cross section of the pencil of light beams being 1 mm or smaller. The substantially collimated light beams emitted from the pencil-conversion optical element 22 are reflected by the scanning section 3.

The scanning section 3 includes reflecting mirrors 31A and 32A, and scan driving units 31B and 32B. The scan driving unit 31B scans the reflecting mirror 31A so that the laser beams are incident on the screen 5 in the vertical direction. The scan driving unit 32B scans the reflecting mirror 32A so that the laser beams are incident on the screen 5 in the horizontal direction. The scan driving units 31B and 32B correspond to the scan driver 100C. Alternatively, the scanning section 3 may have a prism or the like instead of the reflecting mirror.

The light-guiding screen mirror 4 reflects the laser beams from the scanning section 3 so that the laser beams are incident on the screen 5 in the vertical and horizontal directions.

The screen 5 displays an image based on the scanning of the laser beams performed by the scanning section 3.

Based on the rear projection display device 100 having such a configuration, an example of a method for determining relative positions of an exit point of the laser beams from the scanning section 3, the light-guiding screen mirror 4, and the screen 5, is described below. Note that in the rear projection display device 100, the shape of the light-guiding screen mirror 4 is flat.

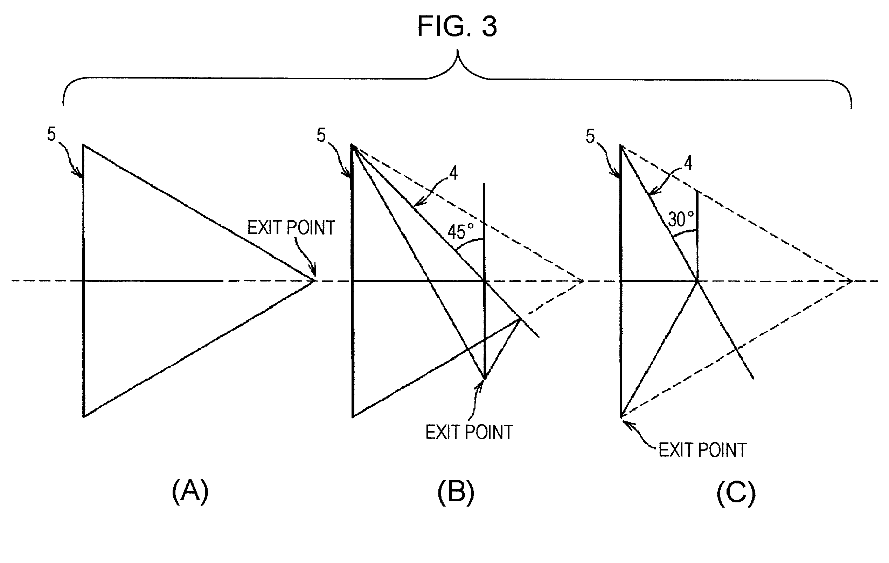

As shown in part (A) of Fig. 3, assume that a distance between the exit point of the laser beams from the scanning section 3 and an upper end of the screen 5 is the same as a distance between the exit point of the laser beams from the scanning section 3 and a lower end of the screen 5, and the distance between the exit point of the laser beams from the scanning section 3 is (√3)/2 of a height of the screen 5.

For example, as shown in part (B) of Fig. 3, when the light-guiding screen mirror 4 is arranged such that an upper end of the light-guiding screen mirror 4 is inclined at 45° to the screen 5, the exit point of the laser beams from the scanning section 3 is located between the light-guiding screen mirror 4 and the screen 5.

To locate the exit point of the laser beams from the scanning section 3 at the lower end of the screen 5 like this embodiment, as shown in part (C) of Fig. 3, the light-guiding screen mirror 4 is arranged such that the upper end of the light-guiding screen mirror 4 is inclined at 30° to the screen 5.

Therefore, in the rear projection display device 100, the light-guiding screen mirror 4 is determined to be arranged such that the upper end of the light-guiding screen mirror 4 is inclined at 30° to the screen 5.

Based on the rear projection display device 100, a correlation between the light-guiding screen mirror 4 and the screen 5 in view of their positions and sizes is described below.

In the rear projection display device 100, the scanning section 3 is located at the lower end of the screen 5 as mentioned above.

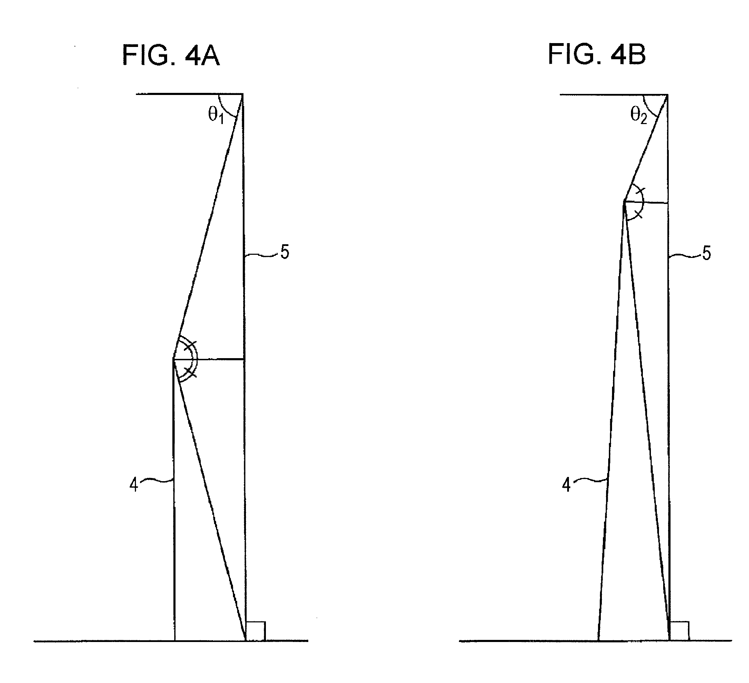

For example, in the rear projection display device 100, the light-guiding screen mirror 4 and the screen 5 are disposed parallel to each other while their lower ends are disposed on a horizontal plane X, as shown in Fig. 4A. In this case, the height of the light-guiding screen mirror 4 is at least 1/2 of the height of the screen 5. The laser beams are incident on the upper end of the screen 5 at an incidence angle θ₁. In Fig. 4A, the incidence position of the laser beams in the height direction of the light-guiding screen mirror 4 is 1/2 of the height of the screen 5.

Alternatively, in the rear projection display device 100, the light-guiding screen mirror 4 may be inclined to the screen 5 while the lower end of the light-guiding screen mirror 4 being fixed on the horizontal plane X, as shown in Fig. 4B. In particular, in the rear projection display device 100, the light-guiding screen mirror 4 may be arranged such that the distance between the upper end of the light-guiding screen mirror 4 and the screen 5 is smaller than the distance between the lower end of the light-guiding screen mirror 4 and the screen 5. In this case, the height of the light-guiding screen mirror 4 may be sufficiently greater than 1/2 of the height of the screen 5 so that an incidence angle θ₂ of the laser beams to the upper end of the screen 5 becomes smaller than the incidence angle θ₁ shown in Fig. 4A.

As described above, in the rear projection display device 100, the height of the light-guiding screen mirror 4 is at least 1/2 of the height of the screen 5. Accordingly, the difference between the incidence angle at the upper end of the screen 5 and the incidence angle at the lower end thereof may be decreased.

With the above-described rear projection display device 100 according to the first embodiment to which the present invention is applied, a distance at the rear side of the screen along the depth direction can be markedly decreased as compared with those of the known rear projection display devices.

In addition, with the rear projection display device 100 according to the first embodiment to which the present invention is applied, the difference between the incidence angles of the laser beams incident on the screen can be decreased as compared with those of the known rear projection display devices. Accordingly, an angle of view can be increased even in the case of a large screen.

In addition, with the rear projection display device 100 according to the first embodiment to which the present invention is applied, since the light source 1 employs the semiconductor laser or the light-emitting diode, a color having an extremely high purity can be reproduced even in the case of the large screen.

Further, with the rear projection display device 100 according to the first embodiment to which the present invention is applied, since the light source 1 employs one of various lasers or the light-emitting diode, the spot diameter in the cross section of the pencil of light beams to be emitted can be miniaturized (spot size = one pixel size). The spot is displayed as one pixel without using Newton's equation for image formation. Therefore, a sharp image can be displayed on the large screen 5 as compared with a plasma display and a liquid crystal display using stationary pixels, and even a known projector.

### Second Embodiment

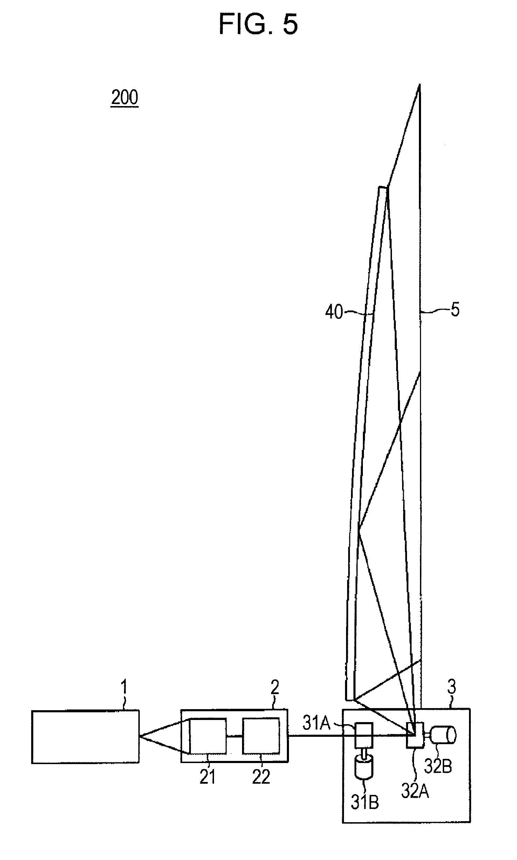

Fig. 5 is a schematic illustration showing an inner structure of a rear projection display device 200 according to a second embodiment to which the present invention is applied. Like numerals refer like components as in the above-described rear projection display device 100, and their detailed descriptions are omitted.

The rear projection display device 200 has a light-guiding screen mirror 40 which has a shape configured such that a curvature in the vertical direction is greater than a curvature in the horizontal direction, and has a concave toric surface with respect to the screen 5.

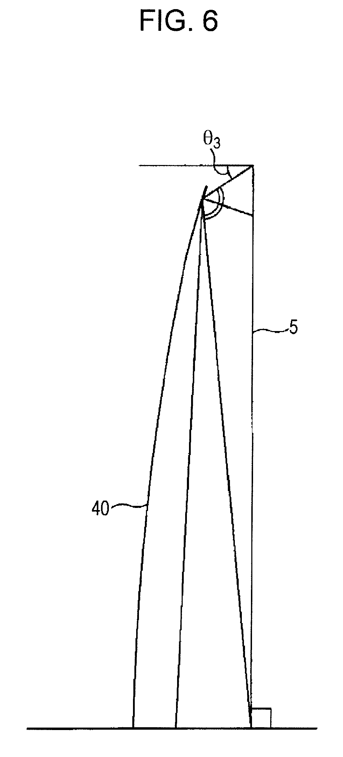

The correlation between the light-guiding screen mirror 4 and the screen 5 in view of their positions and sizes for the rear projection display device 200 is similar to that shown in Fig. 4B. As shown in Fig. 6, the shape of the light-guiding screen mirror 40 is determined such that the curvature in the vertical direction is greater than the curvature in the horizontal direction, and the light-guiding screen mirror 40 has the concave toric surface with respect to the screen 5. Accordingly, an incidence angle θ₃ of the laser beams incident on the screen 5 from the upper end of the light-guiding screen mirror 40 may become further smaller than the incidence angle θ₂ shown in Fig. 4B. In addition, with the rear projection display device 200, the difference between the incidence angles of the laser beams at the positions in the height direction of the screen 5 may be further decreased.

It is noted that the shape of the light-guiding screen mirror 40 is not limited thereto, and for instance, the light-guiding screen mirror 40 may have any curve surface, such as a concave spherical surface or a concave free-form surface, with respect to the screen 5. In the case where the shape of the light-guiding screen mirror 40 is the concave spherical surface, the distance between the light-guiding screen mirror 40 and the screen 5 may be further increased so as to obtain substantially the same difference between the incidence angles of the laser beams on the screen 5 as that obtained when the shape of the light-guiding screen mirror 40 is the concave toric surface, or free-form surface.

The present invention is not limited to the embodiments described above, and may include various modifications within the scope of the present invention.

For example, in the above embodiments, the light source 1 directly modulates the semiconductor laser to emit the laser beams. Alternatively, the light source 1 may additionally include a modulation element that modulates laser beams emitted from a not-modulated light source. The modulation element may be provided between the light source 1 and the optical element 2 to supply the modulated laser beams to the optical element 2. Alternatively, the modulation element may be arranged at any location inside or outside the optical element 2 as long as it is located in the optical path.

For example, in the above embodiments, the pencil-conversion optical element 22 is provided. Alternatively, a pencil-conversion optical element may be provided, which converts the pencil of light beams emitted from the pencil-shaping optical element 21 into a pencil of light beams to be substantially focused on the screen 5 with a diameter of 1 mm or smaller.

In addition, for instance, a curve surface may be additionally provided in the scanning section as another embodiment, the curve surface having a curvature such that the pencil of light beams is substantially focused on the curve surface, and then the pencil of light beams are incident on the screen.

In addition, in the above embodiments, the optical path containing the light source 1 and the optical element 2 is disposed at the rear side of the screen 5 along the depth diction thereof. Alternatively, the optical path containing the light source 1 and the optical element 2 may be bent in the vertical direction of the drawing. Accordingly, the distance at the rear side of the screen 5 along the depth direction may be further decreased.

It should be understood by those skilled in the art that various modifications, combinations, sub-combinations and alterations may occur depending on design requirements and other factors insofar as they are within the scope of the appended claims or the equivalents thereof.

## Claims

1. A rear projection display device (100; 200) that projects an image on a rear side of a screen (5), the device comprising:
a light source (1) that emits a light beam;
an optical element (2) that converts the light beam emitted from the light source (1) into a substantially collimated light beam;
scanning means (3) that performs scanning with the substantially collimated light beam converted by the optical element (2) so as to allow the substantially collimated light beam to be incident on the screen(5); and
a reflecting plate having (4; 40) a height which is at least 1/2 of a height of the screen, the reflecting plate reflecting the light beam from the scanning means (3) so that the light beam is incident on the screen (5).

2. The rear projection display device according to claim 1, wherein a distance between an upper end of the reflecting plate (4; 40) and the screen (5) is smaller than a distance between a lower end of the reflecting plate (4; 40) and the screen (5).

3. The rear projection display device according to claim 1 or 2, wherein the scanning means (3) has a reflecting surface, and drives the reflecting surface so that the screen (5) is scanned with the substantially collimated light beam in vertical and horizontal direction of the screen (5).

4. The rear projection display device according to claim 1, 2 or 3, wherein a shape of the reflecting plate (4) is flat.

5. The rear projection display device according to claim 1, 2 or 3, wherein a shape of the reflecting plate (40) is a concave toric surface with respect to the screen (5).

6. The rear projection display device according to claim 1, 2 or 3, wherein a shape of the reflecting plate (40) is a concave spherical surface with respect to the screen.

7. The rear projection display device according to claim 1, 2 or 3, wherein a shape of the reflecting plate (40) is a concave free-form surface with respect to the screen.

8. The rear projection display device according to one of the claims 1 to 7, wherein the light source (1) is a semiconductor laser.

9. The rear projection display device according to one of the claims 1 to 7, wherein the light source (1) is a light-emitting diode.

10. The rear projection display device according to one of the claims 1 to 9, wherein the light source (1) directly modulates the light beam and emits the light beam.

11. The rear projection display device according to one of the claims 1 to 10, further comprising a modulation element that modulates the light beam emitted from the light source (1).
